# EUROPÄISCHE PATENTANMELDUNG

(11) **EP 3 967 632 A1**
(43) Veröffentlichungstag der Anmeldung: **16.03.2022**
(21) Anmeldenummer: 20195662.0
(22) Anmeldetag: 11.09.2020
(51) Int. Cl.: B65G 47/90, B65B 21/12

(54) **GREIFEINSATZ FÜR EINE PACKTULPE UND PACKTULPE ZUM KOPFSEITIGEN ERGREIFEN VON FLASCHEN**

(71) Anmelder: Zodrow, Rudolf, 40235 Düsseldorf (DE)
(72) Erfinder: Zodrow, Rudolf, 40235 Düsseldorf (DE); Rupprecht, Gregor, 40235 Düsseldorf (DE)
(74) Vertreter: Lotze, Rüdiger

(57) **Zusammenfassung**

Die vorliegende Erfindung betrifft einen topfförmigen, elastisch verformbaren Greifeinsatz (10, 10*) für eine Packtulpe (100.1, 100.2, 100.2*) zum kopfseitigen Ergreifen von insbesondere durch einen Verschluss verschließbaren Flaschen (F1) mit einem als Boden (11a, 11a*) ausgebildeten rückseitigen Ende (11), einer umlaufenden Wandung (13) mit einer Außenseite (13a) und einer Innenseite (13b) sowie einem vorderseitigen, dem Flaschenkopf zugewandten offenen Ende (12). Erfindungsgemäß ist der Greifeinsatz (10, 10*) dadurch gekennzeichnet, dass der Greifeinsatz (10, 10*) im Bereich seines offenen Endes (12) einen ersten axialen Abschnitt (10a) im Bereich seines rückseitigen Endes (11) einen zweiten axialen Abschnitt (10b) aufweist, wobei der erste axiale Abschnitt (10a) als Greifabschnitt (10a) zum Ergreifen eines Flaschenkopfes (F1) ausgebildet ist und wobei in dem zweiten axialen Abschnitt (10b) eine formstabile Stützhülse (40.1, 40.2, 40.2*) zur Begrenzung der radialen Verformung des Greifeinsatzes (10, 10*) in dem zweiten axialen Abschnitt (10b) angeordnet ist. Ferner betrifft die vorliegende Erfindung eine Packtulpe (100.1, 100.2, 100.2*) zum Ergreifen von insbesondere durch einen Verschluss verschließbaren Flaschen (F1) sowie eine Vorrichtung zum kopfseitigen Ergreifen von insbesondere durch einen Verschluss verschließbaren Flaschen

## Beschreibung

Die Erfindung betrifft einen topfförmigen, elastisch verformbaren Greifeinsatz für eine Packtulpe zum kopfseitigen Ergreifen von insbesondere durch einen Verschluss verschließbaren Flaschen mit einem als Boden ausgebildeten rückseitigen Ende, einer umlaufenden Wandung mit einer Außenseite und einer Innenseite sowie einem vorderseitigen, dem Flaschenkopf zugewandten offenen Ende. Ferner betrifft die Erfindung eine Packtulpe zum Ergreifen von insbesondere durch einen Verschluss verschließbaren Flaschen mit einem topfförmigen Gehäuse und einem topfförmigen, elastisch verformbaren Greifeinsatz.

Packtulpen zum Ergreifen von Flaschen der vorstehenden oder ähnlicher Art sind in verschiedenen Ausführungen seit langem bekannt. Üblicherweise umfassen diese dabei ein topfförmiges Gehäuse und einen ebenfalls topfförmigen elastischen Greifeinsatz, der an seinem vorderseitigen, im Betrieb der Packtulpe dem Flaschenkopf zugewandten Rand an einem gehäusefesten radial nach innen weisenden Absatz abgestützt ist.

Die Packtulpen sind in der Regel mit anderen gleichartigen Packtulpen zu einer Gruppe in einem Packkopf zusammengefasst und dienen zum kopfseitigen Ergreifen von Flaschen in Flaschenverpackungsmaschinen. Durch den Packkopf werden die Packtulpen gemeinsam auf eine entsprechende Gruppe von Flaschen abgesenkt. Dabei tauchen die Flaschen mit ihren Köpfen in die einzelnen Packtulpen ein. Die Packtulpen sind dafür ausgelegt, bei entsprechender Ansteuerung die Flaschen durch radiale Klemmung des Flaschenkopfes mittels des sich unter Druckbeaufschlagung kontrolliert radial nach innen wölbenden elastischen Greifeinsatzes zu ergreifen. Die ergriffenen Flaschen einer Gruppe können dann mit dem Packkopf angehoben und versetzt werden, beispielsweise in einen mit Stellplätzen für die einzelnen Flaschen versehenen Kasten oder freistehend auf ein Transportband.

Für die Funktion der ansteuerbaren Packtulpen ist nicht nur wichtig, dass sie die Flaschen durch radiale Klemmung des Flaschenkopfes sicher ergreifen, sondern auch, dass das Ergreifen möglichst schonend erfolgt. Dies gilt vor allem dann, wenn der Flaschenkopf eine besondere Ausstattung aufweist, beispielsweise foliiert ist. Außerdem soll die Packtulpe möglichst nahe an ihrem vorderen Ende den Flaschenkopf erfassen, so dass der Flaschenkopf nur wenig in die Packtulpe einzutauchen braucht, um sicher und möglichst ohne Nachpendeln des Flaschenkörpers ergriffen werden zu können, aber auch um die Flasche schnell freizugeben, was vor allem beim Aufsetzen freistehender Flaschen, insbesondere leerer Kunststoffflaschen, auf ein Transportband die Gefahr des Umkippens vermindert.

In abweichenden Ausgestaltungen der Packtulpen (z.B. WO 2008/055893 A1) umfassen diese neben dem topfförmigen Gehäuse einen hülsenförmigen, elastisch verformbaren Greifeinsatz und einen auf den Einsatz an dessen rückseitigem Ende mit einer axialen Druckkraft einwirkenden Stellkolben. Oftmals sind weitere Komponenten vorgesehen, wie z.B. eine in das Gehäuse eingeschobene Führungshülse, die gleichzeitig als mechanischer Anschlag für den Stellkolben fungiert. Zwar zeichnen sich derartige Konstruktionen durch insgesamt günstige Greifeigenschaften aus, jedoch sind diese Packtulpen durch einen relativ komplizierten, mehrteiligen Aufbau gekennzeichnet, was zu erhöhten Fertigungskosten und Wartungszeiten führt, da der Zusammenbau und die Demontage der Packtulpen einen vergleichsweise hohen Aufwand erfordert.

Aus der Praxis sowie aus der Patentliteratur (z.B. EP 3 103 729 B1) sind ferner Packtulpen bekannt, die ein topfförmiges Gehäuse und einen ebenfalls topfförmigen, elastisch verformbaren Greifeinsatz umfassen. Bei dieser Ausgestaltung, welche ohne Stellkolben auskommt, wird das Druckmedium in das gesamte Gehäuse, somit auch in einen ringförmigen Spalt zwischen der Wand des Gehäuses und des Greifeinsatzes, eingeleitet. Bei Einleitung eines Druckmediums, in der Regel Druckluft, verformt sich somit der elastische Greifeinsatz besonders gleichmäßig, wodurch die Flasche gegriffen wird.

Weitere Ausgestaltungen von Packtulpen mit topfförmigen, elastisch verformbaren Einsätzen sind beispielsweise in den Druckschriften US 3,831,995, DE 7035246 U oder DE 30 25 091 C2 beschrieben.

Besondere Flaschenformen und -materialien stellen besondere Anforderungen an ihre Handhabung durch die Packtulpen. So erweist sich die Handhabung von entleerten PET-Flaschen, welche sehr leicht und damit wenig standfest sind, als besondere Herausforderung. Ebenso verlangen Langhalsflaschen, beispielsweise Weinflaschen, aufgrund ihrer langgestreckten Form eine besondere Handhabung.

Der Erfindung liegt die Aufgabe zugrunde, einen Greifeinsatz für eine Packtulpe sowie eine Packtulpe zum Ergreifen von insbesondere durch einen Verschluss verschließbaren Flaschen anzugeben, welche sich durch ein schonendes und doch sehr sicheres Ergreifen insbesondere von Flaschen mit besonderer Form oder geringer Standfestigkeit auszeichnen, wobei die Packtulpe zudem einfach konstruiert sein und einen ebenso einfachen Zusammenbau ermöglichen soll.

Die Aufgabe wird erfindungsgemäß nach einem ersten Aspekt der Erfindung mit einem topfförmigen, elastisch verformbaren Greifeinsatz nach dem Oberbegriff des Patentanspruches 1 dadurch gelöst, dass der Greifeinsatz im Bereich seines offenen Endes einen ersten axialen Abschnitt und im Bereich seines rückseitigen Endes einen zweiten axialen Abschnitt aufweist, wobei der erste axiale Abschnitt als Greifabschnitt zum Ergreifen eines Flaschenkopfes ausgebildet ist und wobei in dem zweiten axialen Abschnitt eine formstabile Stützhülse zur Begrenzung der radialen Verformung des Greifeinsatzes in dem zweiten axialen Abschnitt angeordnet ist.

Der besondere Vorteil des erfindungsgemäßen Greifeinsatzes liegt darin, dass durch das Vorsehen eines als Greifabschnitt fungierenden ersten axialen Abschnittes und eines zweiten axialen Abschnittes mit Stützfunktion entlang der Längserstreckung des Greifeinsatzes einerseits ein sicheres und schonendes Greifen des Flaschenkopfes gewährleistet wird, während andererseits der zweite axiale Abschnitt ermöglicht, dass auch Flaschen mit besonderer Form, etwa langhalsige Weinflaschen weitgehend pendelfrei gegriffen werden können. Andererseits ist der Greifeinsatz durch den zweiten axialen Abschnitt derart flexibel gestaltbar, dass neben der Greiffunktion auch der Einbau weiterer Systeme für spezifische Handhabungsanforderungen möglich ist.

Durch die im zweiten axialen Abschnitt stets vorgesehene Stützhülse ist sichergestellt, dass die radiale Verformung bei Druckbeaufschlagung des Greifeinsatzes im Gehäuse der Packtulpe sich im Wesentlichen auf des Greifabschnitt konzentriert, so dass hier ein kontrolliertes Greifen eines Flaschenkopfes mit vorbestimmter Verformung und über eine vordefinierte axiale Länge ermöglicht wird.

Durch das Vorsehen eines Greifabschnittes als erstem axialen Abschnitt des Greifeinsatzes und zudem eines zweiten axialen Abschnittes, in welchem die Stützhülse angeordnet ist, weist der Greifeinsatz nach einer vorteilhaften Ausgestaltung insgesamt eine langgestreckte Form auf, was erfindungsgemäß bedeutet, dass seine axiale Erstreckung erheblich größer ist als sein Durchmesser. Beispielsweise kann das Verhältnis zwischen Länge des Greifeinsatzes zum Durchmesser zwischen 3:1 und 2:1 liegen. Dabei hat der Greifabschnitt nach einer vorteilhaften Ausgestaltung eine im Wesentlichen "quadratische" Form, was bedeutet, dass die axiale Länge des Greifabschnittes etwa seinem Durchmesser und damit dem Durchmesser des Greifeinsatzes insgesamt entspricht. Nach einer weiteren vorteilhaften Ausgestaltung sind in axialer Richtung des Greifeinsatzes gesehen der erste axiale Abschnitt, d.h. der Greifabschnitt, und der zweite axiale Abschnitt, in welchem die Stützhülse angeordnet ist, im Wesentlichen gleich lang.

Nach einer weiteren vorteilhaften Ausgestaltung der Erfindung schließt sich der zweite axiale Abschnitt in axialer Richtung des Greifeinsatzes unmittelbar an den Greifabschnitt an. Hierdurch wird die axiale Länge des Greifeinsatzes effizient genutzt und damit überflüssiger Bauraum eingespart.

Erfindungsgemäß ist in dem zweiten axialen Abschnitt des Greifeinsatzes eine Stützhülse angeordnet. Diese dient erfindungsgemäß der Begrenzung der radialen Verformung des Greifeinsatzes in dem zweiten axialen Abschnitt. Dazu ist die Stützhülse erfindungsgemäß nicht elastisch, sondern formstabil ausgebildet und unterscheidet sich damit in ihren Verformungseigenschaften von dem Greifeinsatz, welcher aus einem elastischen Material gefertigt ist und sich dementsprechend unter Einwirkung eines Druckmediums im Gehäuse der Packtulpe kontrolliert verformt. "Formstabil" im Sinne der vorliegenden Erfindung bedeutet daher, dass die Stützhülse auch bei radialer Kraftbeaufschlagung ihre Hülsenform beibehält. Hierzu geeignete Kunststoffmaterialien sind dem Fachmann aus dem Stand der Technik bekannt.

Dadurch, dass infolge der Stützwirkung der Stützhülse eine radiale Verformung des Greifeinsatzes im Bereich seines zweiten axialen Abschnittes im Wesentlichen unterbunden wird, erfolgt das Greifen des Flaschenkopfes somit annähernd ausschließlich im Bereich des Greifabschnitts. Dementsprechend wir bei einer Langhalsflasche, wie einer Weinflasche, die Flasche nicht unmittelbar im Bereich der Mündungsöffnung, sondern mit gewissem Abstand davon gegriffen, was die Pendelneigung beim Greifen und Transportieren und bei der anschließenden Freigabe reduziert. Dies erleichtert wiederum ein lotrechtes und präzises Einbringen der Flasche in das Gefache eines Trägerbehälters.

Die Stützhülse muss im Greifeinsatz sicher befestigt sein, um eine unbeabsichtigte Änderung ihrer relativen Lage oder gar ein Herausfallen aus dem Greifeinsatz sicher zu vermeiden. Nach einer weiteren vorteilhaften Ausgestaltung der Erfindung weist daher der Greifeinsatz an seinem Boden eine, bevorzugt zentrale, Befestigungsvorrichtung zur axialen Befestigung der Stützhülse auf. Dies kann beispielsweise als Gewinde ausgebildet sein, in welches eine entsprechende Schraube eingeschraubt werden kann, die dann die Stützhülse am Boden des Greifeinsatzes hält. Alternativ kann die Befestigungsvorrichtung als Bajonettverschluss ausgebildet sein.

Nach einer besonders vorteilhaften Ausgestaltung der Erfindung ist die Befestigungsvorrichtung als pilzförmiger Flansch ausgebildet, welcher mit einer in der Stützhülse vorgesehenen korrespondierenden stirnseitigen Öffnung zusammenwirkt, vorzugsweise unter Ausbildung einer Schnappverbindung. Bei dieser verformt sich der elastische Flansch - dieser ist bevorzugt einstückig mit dem elastischen Greifeinsatz ausgebildet - beim Einschnappen. Diese Verformung kann durch das Vorsehen radialer Schlitze in den pilzförmigen Flansch noch unterstützt werden. Diese ist besonders schnell und einfach herzustellen und erfordert keinerlei Werkzeug. Das Herstellen der Schnappverbindung wird durch Ausbildung eines Konus am äußeren Rand des pilzförmigen Flansches weiter erleichtert.

Erfindungsgemäß ist die Stützhülse formstabil und damit inelastisch, insbesondere relativ zum Greifeinsatz, ausgebildet. Um jedoch eine gewisse radial einwärtige Verformung zuzulassen, kann nach einer weiteren vorteilhaften Ausgestaltung der Erfindung vorgesehen sein, dass die Stützhülse über ihren Umfang verteilt mehrfach axial geschlitzt ist, wobei sich die Schlitze unter Ausbildung von Stützfingern von dem vorderen, dem Greifabschnitt des Greifeinsatzes zugewandten Ende der Stützhülse in Richtung des Bodens des Greifeinsatzes erstrecken. Hierdurch wird bei radialer Druckbeaufschlagung durch die umgebende Wandung des Greifeinsatzes und damit mittelbar durch das in das Gehäuse der Packtulpe einströmende Druckmedium eine gewisse radial einwärtige Verformung ermöglicht, und zwar bis benachbarte Stützfinder einander berühren und damit die Verformung stoppt.

Es kann vorgesehen sein, dass die Stützhülse weitere Komponenten zur spezifischen Handhabung spezieller Flaschentypen aufweist.

So kann nach einer besonders vorteilhaften Ausgestaltung der Erfindung in der Stützhülse eine federbetriebene Ausstoßeinheit angeordnet sein. Eine solche Ausstoßeinheit erleichtert insbesondere die Handhabung solcher Flaschen, die aus besonders leichtem Material hergestellt sind und im entleerten Zustand gegriffen und freigegeben werden müssen. Hierbei handelt es sich oftmals um PET-Flaschen für Softdrinks oder Mineralwasser, welche im entleerten Zustand eine nur geringe Standfestigkeit aufweisen.

Eine solche Ausstoßeinheit umfasst bevorzugt einen axial federbelasteten und in der umgebenden Stützhülse axial beweglichen Stößel, wobei der Stößel seinerseits einen rückseitigen Kragen aufweist, welcher in Ruhestellung an einer in der Stützhülse angeordneten umlaufenden Schulter zur Hubbegrenzung anliegt. Weiter bevorzugt arbeitet eine solche Ausstoßeinheit derart, dass beim Eintauchen des Flaschenkopfes in den Greifeinsatz der Mündungsrand der Flasche oder die Oberseite der Verschlusskappe am Stößel anschlägt und diesen unter weiterer Spannung der axialen Feder in die Stützhülse zurückdrückt. Um ein versehentliches Eindringen des Stößels in die Mündungsöffnung der zu greifenden Flasche zu verhindern, kann nach einer vorteilhaften Weiterbildung vorgesehen sein, dass der Stößel an seinem vorderseitigen, dem Flaschenkopf zugewandten Ende eine Anlageplatte aufweist. Diese Anlageplatte vergrößert die Auflagefläche des Stößels.

Durch Vorsehen eines stirnseitig angeordneten axialen Gewindes im Stößel als Demontagebohrung kann die Ausstoßeinheit zusammen mit der Stützhülse bei Bedarf einfach aus dem Greifeinsatz ausgebaut werden.

Der Greifeinsatz insgesamt kann weitere konstruktive Merkmale aufweisen, welche eine kontrollierte Verformung unter radialer Druckbeaufschlagung verbessern. So kann nach einer weiteren vorteilhaften Ausgestaltung der Erfindung vorgesehen sein, dass an der Außenseite der umlaufenden Wandung des Greifeinsatzes eine Mehrzahl über den Umfang des Greifeinsatzes verteilter, sich in axialer Richtung erstreckender Stege ausgebildet sind, wobei sich die axialen Stege über den Umfang des Greifeinsatzes mit geschwächten Bereichen abwechseln. Hierdurch wird eine sehr symmetrische radial einwärtige Verformung erreicht. Um das Verformungsverhalten weiter zu verbessern kann alternativ oder ergänzend vorgesehen sein, dass im Bereich des Greifabschnittes die umlaufende Wandung des Greifeinsatzes an ihrer Innenseite über ihren Umfang verteilt eine Mehrzahl von axialen Schwächungen in Form im Wesentlichen axial verlaufender Nuten aufweist. Durch diese konstruktive Ausgestaltung des Greifabschnittes des Greifeinsatzes wird ein besonders schonendes Greifen der Flasche mit exzellenter Zentrierwirkung und unter Vermeidung lokaler Druckspitzen erreicht. Bevorzugt weisen dabei die im Wesentlichen axial verlaufenden Nuten einen runden, insbesondere kreisrunden, Querschnitt auf. Ein solch runder, insbesondere kreisrunder, Querschnitt ohne kleine Radien o.ä. ermöglicht eine einfache Fertigung des Greifeinsatzes und zudem vereinfachte Reinigung.

Weist der Greifeinsatz zudem außenseitige axiale Stege mit dazwischen angeordneten geschwächten Bereichen auf, so wird im Sinne eines weiter verbesserten symmetrischen Verformungsverhaltens bevorzugt, dass die Anzahl der sich in axialer Richtung erstreckenden Stege der Anzahl der an der Innenseite der umlaufenden Wandung vorgesehenen, im Wesentlichen axial verlaufenden Nuten entspricht, wobei die Stege und die Nuten in radialer Richtung bevorzugt paarweise übereinander liegen.

Die eingangs genannte Aufgabe wird nach einem zweiten Aspekt der vorliegenden Erfindung auch durch eine Packtulpe zum Ergreifen von insbesondere durch einen Verschluss verschließbaren Flaschen mit einem topfförmigen Gehäuse und einem topfförmigen, elastisch verformbaren Greifeinsatz nach einem der Ansprüche 1 bis 13 gelöst, wobei der Greifeinsatz, bevorzugt über einen an seinem vorderseitigen Ende angeordneten radial nach außen weisenden Kragen, an einem gehäusefesten Absatz abgestützt ist.

Für die Vorteile dieser Packtulpe gelten die vorstehenden im Zusammenhang mit dem erfindungsgemäßen Greifeinsatz gegebenen Erläuterungen entsprechend.

Nach einer vorteilhaften Ausgestaltung der Erfindung kann ferner vorgesehen sein, dass der Außendurchmesser des Greifeinsatzes relativ zum Innendurchmesser des Gehäuses derart bemessen ist, dass sich zwischen der Innenwand des Gehäuses und der Außenseite der umlaufenden Wandung des Greifeinsatzes ein durchgehendes Ringvolumen ausbildet. Der besondere Vorteil dieses Ringvolumens liegt darin, dass durch die gleichmäßige Druckbeaufschlagung über den gesamten Umfang des Greifeinsatzes über das durchgehende Ringvolumen ein besonders vorteilhaftes Verformungsverhalten insbesondere im Bereich des Greifabschnittes des Greifeinsatzes erreicht wird. Insbesondere bei Ausbildung der Außenseite der Wandung des Greifeinsatzes mit einer Mehrzahl über den Umfang des Greifeinsatzes verteilter axialer Stege und geschwächter Bereiche wird durch die alternierende Ausbildung von axialen Stegen und geschwächten Bereichen über den Umfang in einem ersten Schritt die Flasche zunächst von den Wandabschnitten der geschwächten Bereiche vorgegriffen, wobei bei weiter steigendem Druck im Ringvolumen sich anschließend auch die axialen Stege radial einwärts verformen und einen sicheren Halt der Flasche in der Packtulpe gewährleisten. Die Breite des Ringvolumens in radialer Richtung zwischen den Außenseiten der axialen Stege und der Innenwand des Gehäuses kann beispielsweise 0,1 bis 0,5 mm betragen.

Ein weiterer Aspekt der vorliegenden Erfindung betrifft eine Vorrichtung zum kopfseitigen Ergreifen von insbesondere durch einen Verschluss verschließbaren Flaschen mit wenigstens einer Packtulpe nach einem der Ansprüche 13 oder 14.

Im Folgenden wird die Erfindung anhand einer einem Ausführungsbeispiel darstellenden Zeichen näher erläutert. Es zeigen:
- Fig. 1: einen Greifeinsatz für eine Packtulpe zum kopfseitigen Ergreifen von Flaschen in einer ersten Ausgestaltung im Längsschnitt,
- Fig. 2: den Greifeinsatz der Fig. 1 mit eingebauter Stützhülse im Längsschnitt,
- Fig. 3: die Stützhülse der Fig. 2 im Längsschnitt,
- Fig. 4a,: b eine Packtulpe mit einem Greifeinsatz der Fig. 2 im Längsschnitt und im Querschnitt gemäß Schnittlinie A-A in Fig. 4a,
- Fig. 5: die Packtulpe der Fig. 4 mit einer in die Packtulpe eingeführten Langhalsflasche,
- Fig. 6: einen Greifeinsatz für eine Packtulpe zum kopfseitigen Ergreifen von Flaschen in einer zweiten Ausgestaltung mit einer Stützhülse und darin angeordneter Ausstoßeinheit im Längsschnitt,
- Fig. 7a,: b eine Packtulpe mit einem Greifeinsatz der Fig. 6 im Längsschnitt und im Querschnitt gemäß Schnittlinie B-B in Fig. 7a,
- Fig. 8a, b: die Packtulpe der Fig. 7 im Längsschnitt und im Querschnitt gemäß Schnittlinie C-C in Fig. 8a,
- Fig. 9: einen Greifeinsatz für eine Packtulpe zum kopfseitigen Ergreifen von Flaschen in einer dritten Ausgestaltung mit einer Stützhülse und darin angeordneter Ausstoßeinheit im Längsschnitt, und
- Fig. 10: eine Packtulpe mit einem Greifeinsatz der Fig. 9.

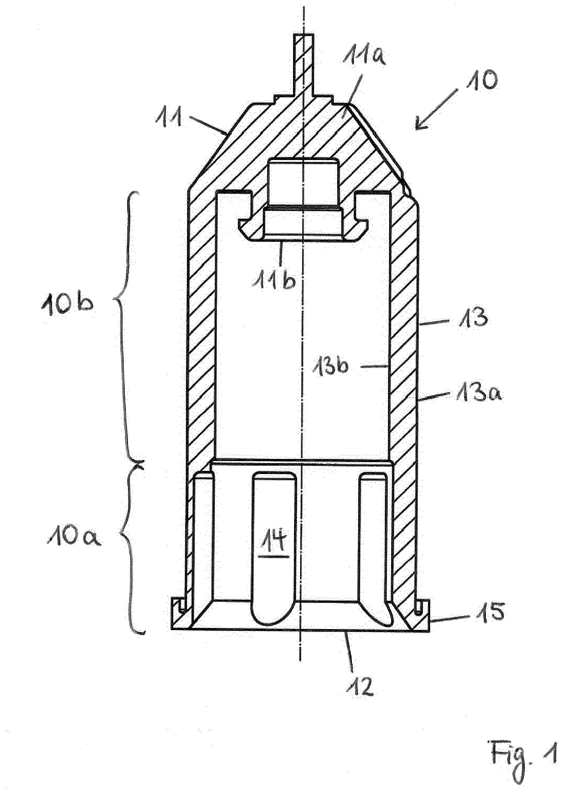

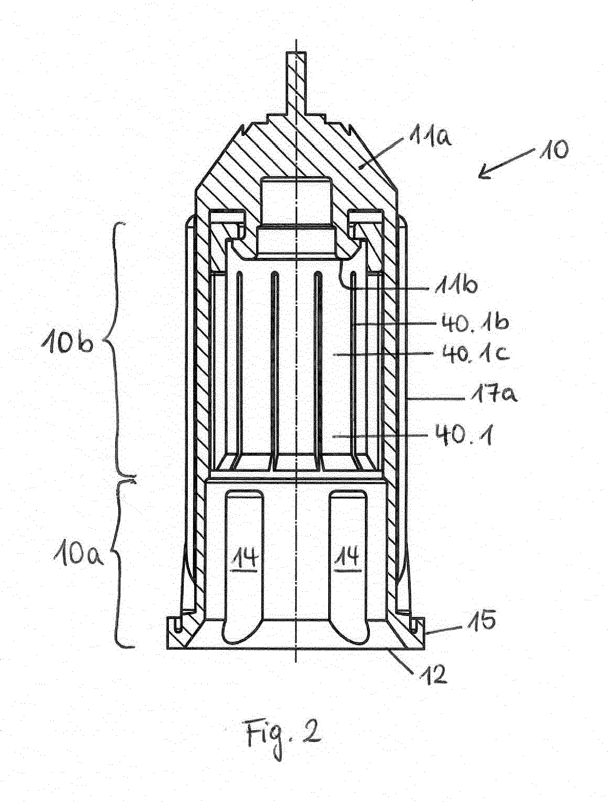

Fig. 1 und 2 zeigen einen topfförmigen Greifeinsatz 10 für eine Packtulpe 100.1, 100.2 zum kopfseitigen Ergreifen von Flaschen in einer ersten Ausgestaltung im Längsschnitt.

Der topfförmige Greifeinsatz umfasst ein als Boden 11a ausgebildetes rückseitiges Ende 11, eine umlaufende Wandung 13 mit einer Außenseite 13a und einer Innenseite 13b sowie eine vorderseitiges, dem Flaschenkopf zugewandtes offenes Ende 12. Im Bereich seines offenen Endes 12 weist der Greifeinsatz 10 einen ersten axialen Abschnitt 10a sowie im Bereich seines rückseitigen Endes 11 einen zweiten axialen Abschnitt 10b auf. Dabei ist der erste axiale Abschnitt 10a als Greifabschnitt 10a zum Ergreifen eines Flaschenkopfes F1 ausgebildet, wie im Folgenden noch näher erläutert wird. Wie erkennbar, ist der Greifeinsatz 10 relativ langgestreckt ausgebildet, was bedeutet, dass sein Durchmesser deutlich kleiner ist als seine axiale Länge. Der Greifabschnitt 10a des Greifeinsatzes hingegen ist annähernd "quadratisch" ausgebildet, was wiederum bedeutet, dass die axiale Erstreckung des Greifabschnittes 10a in etwa seinem Durchmesser entspricht.

Wie in Fig. 2 gezeigt, ist in dem zweiten axialen Abschnitt 10b eine formstabile Stützhülse 40.1 angeordnet. Diese dient der Begrenzung der radialen Verformung des Greifeinsatzes 10 im zweiten axialen Abschnitt 10b. Die formstabile Stützhülse 10 ist vorliegend über eine als Schnappverbindung ausgebildete Befestigungsvorrichtung stirnseitig mit dem Boden 11a des Greifeinsatzes verbunden. Hierzu ist am Boden 11a des Greifeinsatzes 10 ein pilzförmiger Flansch 11b vorgesehen, auf welchen die Stützhülse 40.1 über eine korrespondierende stirnseitige Öffnung 40.1a unter Herstellung der Schnappverbbindung gedrückt ist.

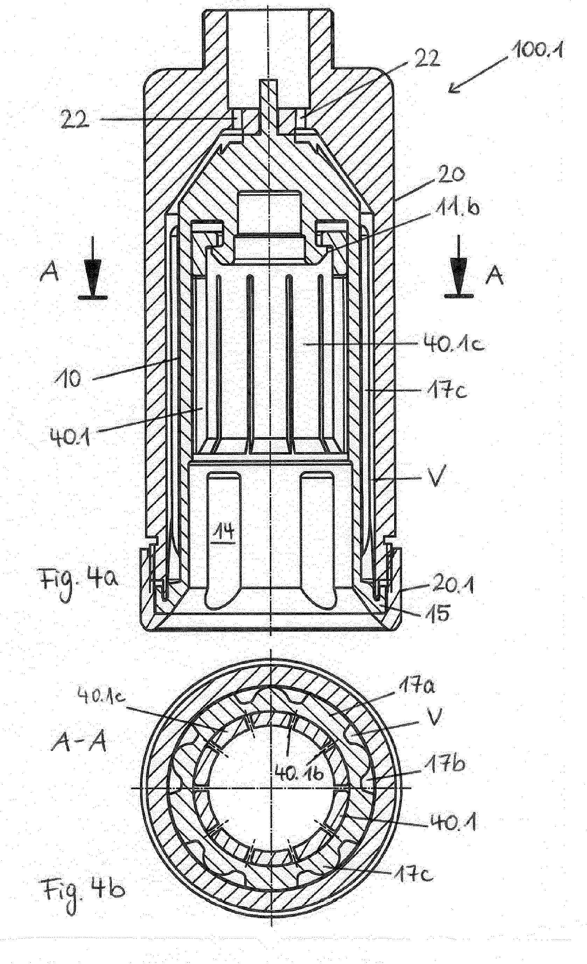

Wie insbesondere in Fig. 2 und den Querschnittzeichnungen der Fig. 4a sowie 7a, 8a erkennbar, sind an der Außenseite 13a der umlaufenden Wandung 13 des Greifeinsatzes 10 eine Mehrzahl über den Umfang des Greifeinsatzes 10 verteilter, sich in axialer Richtung erstreckender Stege 17a ausgebildet, wobei sich die axialen Stege über den Umfang des Greifeinsatzes 10 mit geschwächten Bereichen 17b abwechseln. In den geschwächten Bereichen 17b sind Verstärkungsrippen 17c mit abgerundetem Querschnitt angeordnet. Weiterhin umfasst die umlaufende Wandung 13 des Greifeinsatzes 10 an ihrer Innenseite 13b im Bereich des Greifabschnittes 10a eine Mehrzahl von über ihren Umfang verteilten axial verlaufenden Nuten 14. Die Nuten 14 ihrerseits haben vorliegend einen runden, insbesondere kreisrunden, Querschnitt, was die u.a. Reinigung des Greifeinsatzes 10 erleichtert. Wie wiederum insbesondere aus den Querschnittszeichnungen der Fig. 4a sowie 7a, 8a hervorgeht, entspricht vorliegend die Anzahl der sich in axialer Richtung erstreckenden Stege 17a der Anzahl der an der Innenseite 13b der umlaufenden Wandung 13 vorgesehenen axial verlaufenden Nuten 14, wobei die Stege 17a und die Nuten 14 in radialer Richtung paarweise übereinander liegen.

Schließlich weist der Greifeinsatz 10 noch einen an seinem vorderseitigen Ende 12 ausgebildeten radial nach außen weisenden Kragen 15 auf, mit welchem er im eingebauten Zustand des Greifeinsatzes 10 am Gehäuse abgestützt ist.

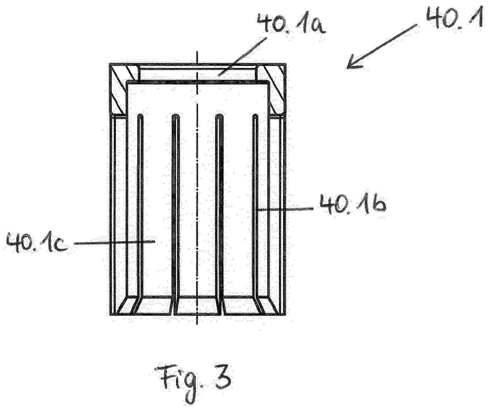

Wie erwähnt, ist in dem zweiten axialen Abschnitt 10b des elastischen Greifeinsatzes 10 eine formstabile Stützhülse 40.1 angeordnet, welche die radiale Verformung des Greifeinsatzes 10 in dem zweiten axialen Abschnitt 10b begrenzt. Eine Detailansicht der Stützhülse 40.1 im ausgebauten Zustand ist in der Fig. 3 dargestellt. Demnach ist die Stützhülse über ihren Umfang verteilt mehrfach axial geschlitzt, wobei sich, wie wiederum in Fig. 2 erkennbar, die Schlitze 40.1b unter Ausbildung von Stützfingern 40.1c von dem vorderen, dem Greifabschnitt 10a des Greifeinsatzes 10 zugewandten Ende der Stützhülse 40.1 in Richtung des Bodens 11a des Greifeinsatzes 10 erstrecken.

In Fig. 4a,b ist eine Packtulpe 100.1 mit einem Greifeinsatz der vorbeschriebenen Art im Längsschnitt und im Querschnitt gemäß Schnittlinie A-A der Fig. 4a dargestellt. Wie erkennbar, umfasst die Packtulpe ein ebenfalls topfförmiges, langgestrecktes Gehäuse 20, in welches der Greifeinsatz 10 axial eingeschoben ist. wobei sich der Greifeinsatz 10 über seinen Kragen 15 an einem gehäusefesten Absatz abstützt. Dieser Absatz wird vorliegend durch einen auf das Gehäuse 100.1 aufschraubbaren Klemmring 20.1 gebildet. Eine weitere Besonderheit der vorliegenden Packtulpe 100.1 besteht darin, dass der Außendurchmesser des Greifeinsatzes 10 relativ zum Innendurchmesser des Gehäuses 20 derart bemessen ist, dass sich zwischen der Innenwand des Gehäuses 20 und der Außenseite 13a mit den axialen Stegen 17a der umlaufenden Wandung 13 des Greifeinsatzes 10 ein durchgehendes Ringvolumen V ausbildet. In den Querschnittansichten der Fig. 4b, Fig. 7b und Fig. 8b ist dieser auch zwischen den Außenseiten der axialen Stege 17a und der Gehäuseinnenwand bestehende Abstand aus zeichnerischen Gründen nicht dargestellt.

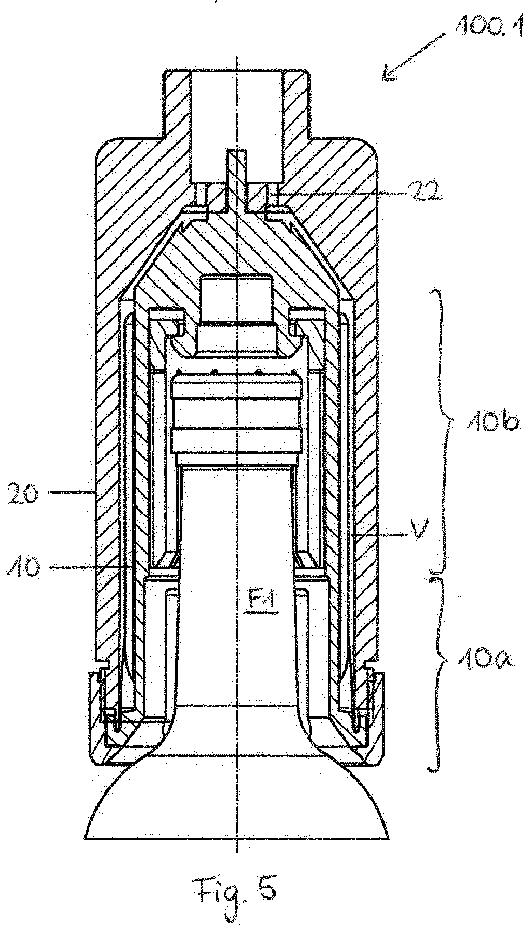

Die Packtulpe 100.1 eignet sich insbesondere zum Greifen von Langhalsflaschen F1, insbesondere Weinflaschen, wie in Fig. 5 gezeigt. Hierzu taucht der Flaschenkopf in den langgestreckten Greifeinsatz 10 der Packtulpe 100.1 ein, so dass der Verschluss der Flasche sich auf Höhe des zweiten axialen Abschnittes 10b des Greifeinsatzes 10 und damit im Bereich der Stützhülse 40.1 befindet. Dementsprechend kann der Greifabschnitt 10a am langgestreckten Hals der Weinflasche F1 angreifen. Im Betrieb der Packtulpe wird nun ein Druckmedium, vorliegend Druckluft, über im Gehäuse 20 vorgesehene Kanäle 22 in das den Greifeinsatz umgebende Ringvolumen V eingeleitet. Dabei verformt sich der Greifabschnitt 10 radial einwärts und greift dabei in schonender Weise und mit exzellenter Zentrierwirkung den Flaschenhals der Weinflasche F1. Im Bereich der formstabilen Stützhülse 40.1 wird dagegen eine radial einwärtige Verformung nur bis zu einem gewissen Grade zugelassen, nämlich bis sich die über den Umfang der Stützhülse 40.1 vorgesehenen Schlitze 40.1b schließen, so dass die gebildeten Stützfinger 40.1c aneinanderlegen und damit den Verformungsprozess im Bereich der Stützhülse 40.1 unterbrechen.

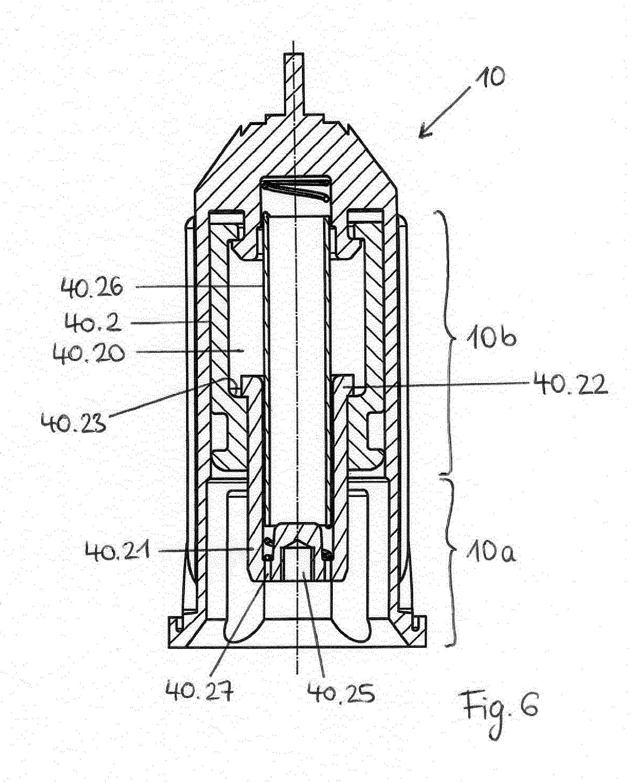

In den Fig. 6 bis 8 ist nun eine weitere Variante des erfindungsgemäßen Greifeinsatzes 10 und einer diesen umfassenden Packtulpe 100.2 dargestellt.

Der elastische Greifeinsatz (ohne die Stützhülse) selbst ist gegenüber den Fig. 1 bis 5 unverändert, jedoch weist die formstabile Stützhülse 40.2 deutliche Unterschiede zu der Stützhülse 40.1 der Fig. 2 bis 5 auf.

So ist in Fig. 6 dargestellt, dass in der Stützhülse 40.2 eine federbetriebene Ausstoßeinheit 40.20 angeordnet ist. Diese umfasst einen axial federbelasteten Stößel 40.21, wobei die Feder als langestreckte Schraubenfeder 40.26 ausgebildet ist. Aus zeichnerischen Gründen ist die Schraubenfeder 40.26 im mittleren Abschnitt lediglich als schmaler Zylinder dargestellt, erstreckt sich jedoch bevorzugt über den gesamten Bereich. Im rückwärtigen Bereich ist die Schraubenfeder 40.26 in einer im Boden 11a des Greifeinsatzes 10 eingeformten Sacköffnung abgestützt. Im vorderen Bereich ist sie im hohl ausgeführten Stößel 40.21 abgestützt, welcher einen rückseitigen Kragen 40.22 aufweist, der seinerseits in Ruhestellung an einer in der Stützhülse 40.2 angeordneten umlaufenden Schulter 40.23 zur Hubbegrenzung anliegt, wie u.a. in Fig. 6 dargestellt. Der Stößel 40.21 weist zu Montage-/Demontagezwecken an seinem vorderseitigen, dem Flaschenkopf zugewandten Ende ein axiales Gewinde 40.25 auf. Stirnseitig weist der Stößel 40.21 ferner noch eine Mehrzahl von Öffnungen 40.27 auf, durch welche beispielsweise Kondenswasser ablaufen kann.

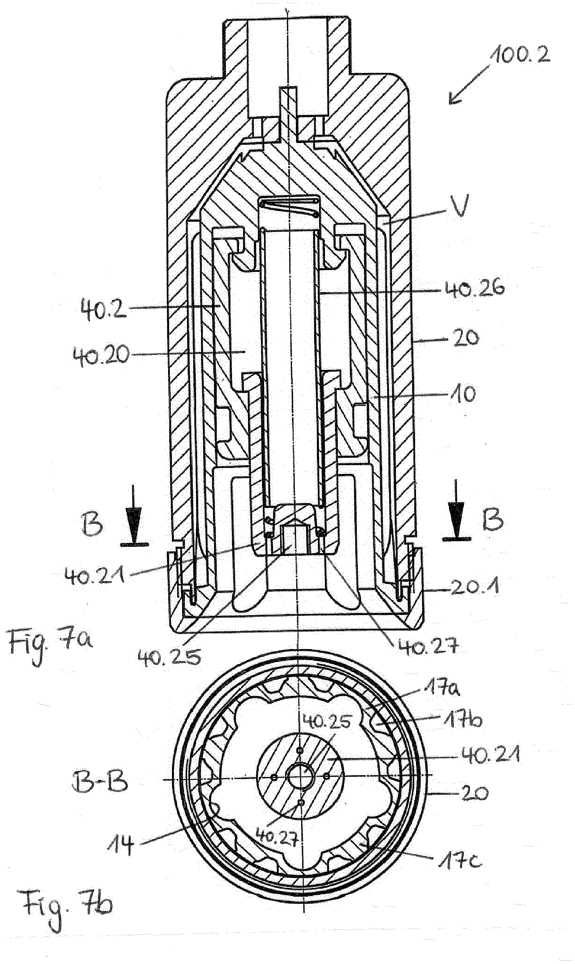

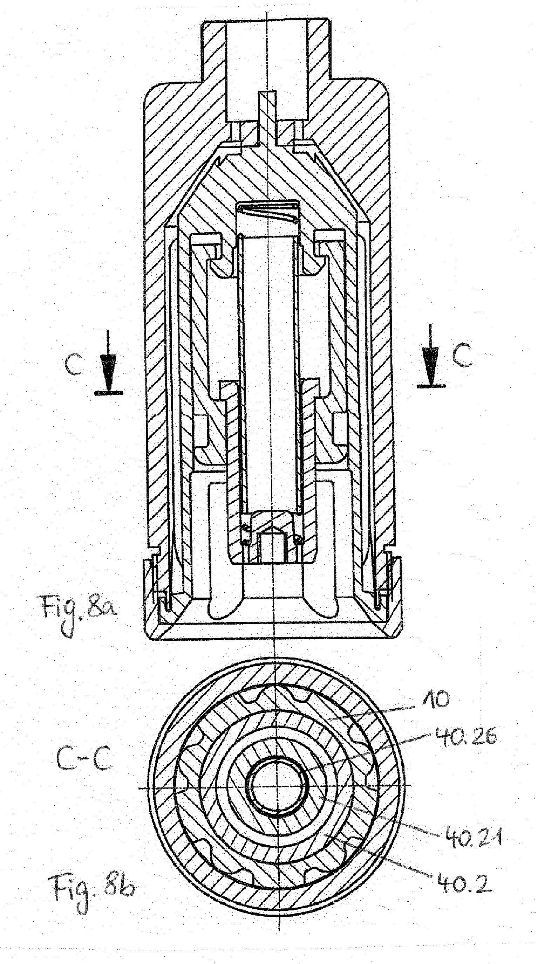

Im Betrieb der Packtulpe 100.2 (s. Fig. 7 und 8) taucht der zu greifende Flaschenkopf beispielsweise einer PET-Flasche in den Greifabschnitt 10a des Greifeinsatzes 10 ein und drückt dabei den Stößel 40.21 in rückwärtige Richtung, wobei die Feder 40.26 weiter gespannt wird. Durch Einleitung des Druckmediums in das Ringvolumen V verformt sich der Greifabschnitt 10a radial einwärtig und greift den Flaschenkopf (nicht dargestellt). Da die Stützhülse 40.2 bevorzugt besonders dickwandig ausgeführt ist, tritt im Bereich des zweiten axialen Abschnitts 10.2 eine radiale Verformung praktisch nicht auf. Bei der Freigabe des Flaschenkopfes durch Ausleitung des Druckmediums und Anheben der Packtulpe wird die Flasche, durch die Kraft der gespannten Feder 40.26 sofort aus dem Greifeinsatz 10 herausgedrückt. Insbesondere bei einer entleerten und damit leichtgewichtigen PET-Flasche hat dies den Vorteil, dass ein Verhaken der PET-Flasche, beispielsweise über den unterhalb des Schraubverschlusses vorgesehenen, aufgebrochenen Sicherheitsring, in der Packtulpe und in der Konsequenz ein nicht lotgerechtes Abstellen der Flasche - was zu einem Umfallen führen würde - sicher vermieden wird.

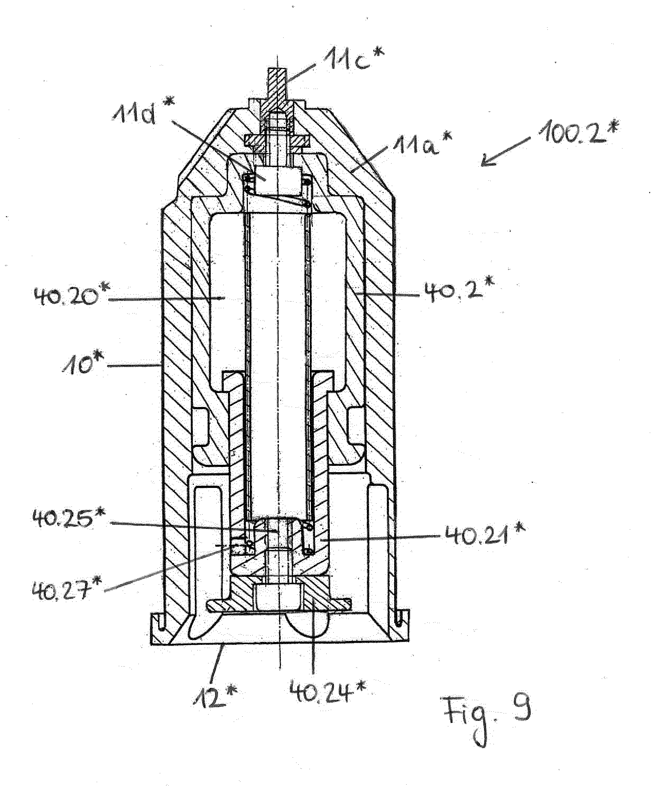

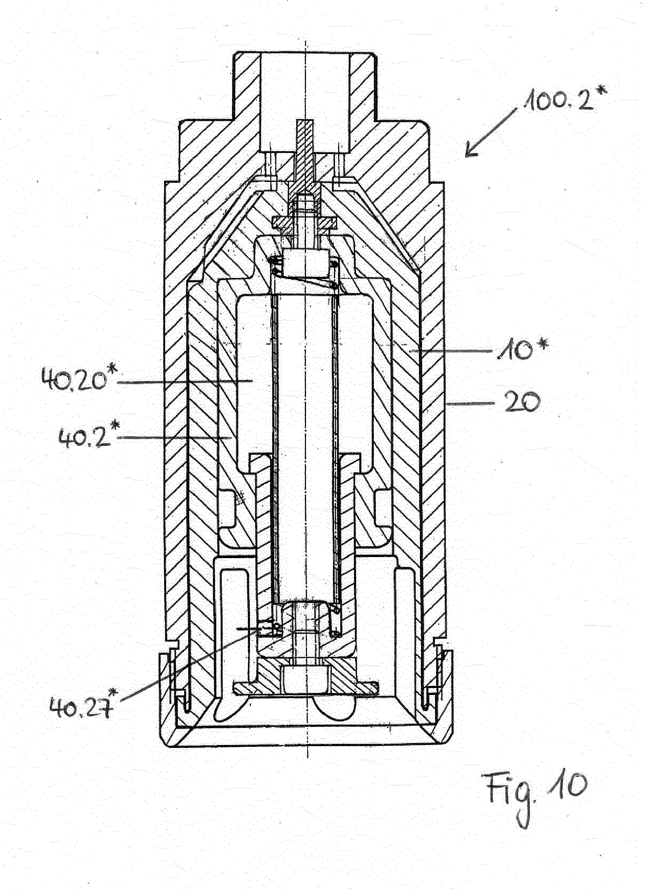

Die Fig. 9 zeigt nun einen Greifeinsatz 10* für eine Packtulpe 100.2* zum kopfseitigen Ergreifen von Flaschen in einer dritten Ausgestaltung mit einer Stützhülse 40.2*und darin angeordneter Ausstoßeinheit 40.20* im Längsschnitt und die Fig. 10 eine Packtulpe mit einem Greifeinsatz der Fig. 9.

Der Greifeinsatz 10* unterscheidet sich von dem Greifeinsatz 10 in mehrfacher Hinsicht. So weist der Greifeinsatz 10* in seinem Boden 11a* eine Verschraubungseinheit 11c* bevorzugt aus einem inelastischen Kunststoff auf, welche beispielsweise bei der Fertigung des Greifeinsatzes mittels Spritzguss mit dem elastischen Kunststoff umspritzt werden kann. Die Verschraubungseinheit 11c* umfasst ein der vorderseitigen Öffnung 12* zugewandtes Sackgewinde, in welches zwecks Befestigung der Stützhülse 40.2* eine Schraube 11d* eingeschraubt werden kann. Weiterhin weist der Stößel 40.21* an seiner vorderseitigen, dem Flaschenkopf zugewandten Ende eine Anlageplatte 40.24* auf. Durch diese Anlageplatte 40.24* vergrößert die Auflagefläche des Stößels 40.21* und verhindert somit ein versehentliches Eindringen des Stößels 40.21* in die Mündungsöffnung der zu greifenden Flasche. Die Anlageplatte 40.24* weist vorliegend eine Durchgangsöffnung auf, mittels derer beispielsweise die Schraubverbindung zwischen Stützhülse 40.2* und der Verschraubungseinheit 11c* mit einem Werkzeug (nicht dargestellt) erreicht werden kann. Weiterhin kann die Anlageplatte 40.24* über eine weitere Schraubverbindung mit dem Stößel 40.21* (Durchgangsgewindeöffnung 40.25*) sicher verbunden werden. Da aufgrund der Anlageplatte 40.24* eine axiale Entwässerung der Ausstoßeinheit 40.20* erschwert ist, ist bei dieser Ausgestaltung vorgesehen, dass im Stößel 40.21* wenigstens eine radial ausgerichtete Entwässerungsöffnung 40.27* angeordnet ist.

Ein besonderer Vorteil der vorstehend beschriebenen Packtulpe 100.2*, wie auch der Packtulpen 100.1, 100.2, besteht darin, dass der jeweilige Greifeinsatz 10, 10* nach Abschrauben des Klemmrings 20.1 - gleichsam mit einem Griff - mitsamt der Stützhülse und der darin ggf. angeordneten Ausstoßeinheit aus dem Gehäuse 20 entfernt und ausgetauscht werden kann, falls es in einer Packtulpe beispielsweise zu einer Leckage und damit zu dem Austreten von Druckluft kommt.

## Patentansprüche

1. Topfförmiger, elastisch verformbarer Greifeinsatz (10, 10*) für eine Packtulpe (100.1, 100.2, 100.2*) zum kopfseitigen Ergreifen von insbesondere durch einen Verschluss verschließbaren Flaschen (F1) mit einem als Boden (11a, 11a*) ausgebildeten rückseitigen Ende (11), einer umlaufenden Wandung (13) mit einer Außenseite (13a) und einer Innenseite (13b) sowie einem vorderseitigen, dem Flaschenkopf zugewandten offenen Ende (12),
**dadurch gekennzeichnet, dass**
der Greifeinsatz (10, 10*) im Bereich seines offenen Endes (12) einen ersten axialen Abschnitt (10a) im Bereich seines rückseitigen Endes (11) einen zweiten axialen Abschnitt (10b) aufweist, wobei der erste axiale Abschnitt (10a) als Greifabschnitt (10a) zum Ergreifen eines Flaschenkopfes (F1) ausgebildet ist und wobei in dem zweiten axialen Abschnitt (10b) eine formstabile Stützhülse (40.1, 40.2, 40.2*) zur Begrenzung der radialen Verformung des Greifeinsatzes (10, 10*) in dem zweiten axialen Abschnitt (10b) angeordnet ist.

2. Greifeinsatz (10, 10*) nach Anspruch 1,
**dadurch gekennzeichnet, dass**
sich der zweite axiale Abschnitt (10b) in axialer Richtung des Greifeinsatzes (10) unmittelbar an den Greifabschnitt (10a) anschließt.

3. Greifeinsatz (10) nach Anspruch 1 oder 2,
**dadurch gekennzeichnet, dass**
der Greifeinsatz (10, 10*) an seinem Boden (11a, 11a*) eine Befestigungsvorrichtung (11b) zur axialen Befestigung der Stützhülse (40.1, 40.2, 40.2*) aufweist.

4. Greifeinsatz (10) nach Anspruch 3,
**dadurch gekennzeichnet, dass**
die Befestigungsvorrichtung als pilzförmiger Flansch (11b) ausgebildet ist, welcher mit einer in der Stützhülse (40.1, 40.2, 40.2*) vorgesehenen korrespondierenden stirnseitigen Öffnung (40.1a, 40.2a) zusammenwirkt, vorzugsweise unter Ausbildung einer Schnappverbindung.

5. Greifeinsatz (10) nach einem der Ansprüche 1 bis 4,
**dadurch gekennzeichnet, dass**
die Stützhülse (40.1) über ihren Umfang verteilt mehrfach axial geschlitzt ist, wobei sich die Schlitze (40.1b) unter Ausbildung von Stützfingern (40.1c) von dem vorderen, dem Greifabschnitt (10a) des Greifeinsatzes (10) zugewandten Ende der Stützhülse (40.1) in Richtung des Bodens (11a) des Greifeinsatzes (10) erstrecken.

6. Greifeinsatz (10, 10*) nach einem der Ansprüche 1 bis 4,
**dadurch gekennzeichnet, dass**
in der Stützhülse (40.2) eine federbetriebene Ausstoßeinheit (40.20) angeordnet ist.

7. Greifeinsatz (10, 10*) nach Anspruch 6,
**dadurch gekennzeichnet, dass**
die Ausstoßeinheit (40.20) einen axial federbelasteten Stößel (40.21) umfasst, wobei der Stößel (40.21) einen rückseitigen Kragen (40.22) aufweist, welcher in Ruhestellung an einer in der Stützhülse (40.2) angeordneten umlaufenden Schulter (40.23) zur Hubbegrenzung anliegt.

8. Greifeinsatz (10*) nach Anspruch 7,
**dadurch gekennzeichnet, dass**
der Stößel (40.21*) an seinem vorderseitigen, dem Flaschenkopf (F1) zugewandten Ende eine Anlageplatte (40.24*) aufweist.

9. Greifeinsatz (10, 10*) nach Anspruch 7 oder 8,
**dadurch gekennzeichnet, dass**
der Stößel (40.21) an seinem vorderseitigen, dem Flaschenkopf (F1) zugewandten Ende ein axiales Gewinde (40.25) aufweist.

10. Greifeinsatz (10, 10*) nach einem der Ansprüche 1 bis 9,
**dadurch gekennzeichnet, dass**
an der Außenseite (13a) der umlaufenden Wandung (13) des Greifeinsatzes (10, 10*) eine Mehrzahl über den Umfang des Greifeinsatzes (10, 10*) verteilter, sich in axialer Richtung erstreckender Stege (17a) ausgebildet sind, wobei sich die axialen Stege über den Umfang des Greifeinsatzes (10, 10*) mit geschwächten Bereichen (17b) abwechseln.

11. Greifeinsatz (10, 10*) nach einem der Ansprüche 1 bis 10,
**dadurch gekennzeichnet, dass**
im Bereich des Greifabschnittes (10a) die umlaufende Wandung (13) des Greifeinsatzes (10, 10*) an ihrer Innenseite (13b) über ihren Umfang verteilt eine Mehrzahl von axialen Schwächungen in Form im Wesentlichen axial verlaufender Nuten (14) aufweist, wobei die Nuten (14) bevorzugt einen runden, insbesondere kreisrunden, Querschnitt aufweisen.

12. Greifeinsatz (10, 10*) nach Anspruch 10 und 11,
**dadurch gekennzeichnet, dass**
die Anzahl der sich in axialer Richtung erstreckenden Stege (17a) der Anzahl der an der Innenseite (13b) der umlaufenden Wandung (13) vorgesehenen, im Wesentlichen axial verlaufenden Nuten (14) entspricht, wobei die Stege (17a) und die Nuten (14) in radialer Richtung paarweise übereinander liegen.

13. Packtulpe (100.1, 100.2, 100.2*) zum Ergreifen von insbesondere durch einen Verschluss verschließbaren Flaschen (F1) mit einem topfförmigen Gehäuse (20) und einem topfförmigen, elastisch verformbaren Greifeinsatz (10, 10*) nach einem der Ansprüche 1 bis 12, wobei der Greifeinsatz (10, 10*), bevorzugt über einen an seinem vorderseitigen Ende (12) angeordneten radial nach außen weisenden Kragen (15), an einem gehäusefesten Absatz (21) abgestützt ist.

14. Packtulpe (100.1, 100.2, 100.2*) nach Anspruch 13,
**dadurch gekennzeichnet, dass**
der Außendurchmesser des Greifeinsatzes (10, 10*) relativ zum Innendurchmesser des Gehäuses (20) derart bemessen ist, dass sich zwischen der Innenwand des Gehäuses (20) und der Außenseite (13a) der umlaufenden Wandung (13) des Greifeinsatzes (10, 10*) ein durchgehendes Ringvolumen (V) ausbildet.

15. Vorrichtung zum kopfseitigen Ergreifen von insbesondere durch einen Verschluss verschließbaren Flaschen (F1) mit wenigstens einer Packtulpe (100.1, 100.2, 100.2*) nach Anspruch 13 oder 14.
